# FASCICULE DE BREVET EUROPEEN

(11) **EP 2 597 435 B1**
(45) Date de publication et mention de la délivrance du brevet: **30.10.2019**
(21) Numéro de dépôt: 11306554.4
(22) Date de dépôt: 24.11.2011
(51) Int. Cl.: G01F 15/00, G01F 15/06, G01F 15/14

(54) **Compteur de fluide, en particulier d'eau**
Flüssigkeitszähler, insbesondere für Wasser
Flow meter, especially for water

(43) Date de publication de la demande: 29.05.2013
(73) Titulaire: Itron Global SARL, Liberty Lake WA 99019 (US)
(72) Inventeur: Bulteau, Serge, 69840 Julienas (FR); Bottner, Michel, 71850 Charnay les Macon (FR); Schwenter, Sébastien, 69460 Odenas (FR); Renoud, Anthony, 01290 Saint Andre D'Huiriat (FR)
(74) Mandataire: Howson, Richard Giles Bentham

(56) Documents cités:
- US-A1- 2009 115 689
- US-B2- 6 611 769

## Description

L'invention concerne un compteur de fluide, en particulier d'eau.

Classiquement, un compteur de fluide, en particulier d'eau, comporte une bâche pourvue d'une conduite d'arrivée et d'une conduite de sortie de l'eau et contenant une chambre de mesure, qui peut être à turbine, à piston oscillant ou statique, par exemple à ultrasons. Sur cette bâche est monté et connecté un totalisateur permettant de déterminer le débit ou le volume d'eau traversant la bâche. Ce totalisateur comporte divers éléments électriques, mécaniques et électroniques et est contenu dans un couvercle, en général en matière plastique, qui assure son maintien et qui comporte une fenêtre de visualisation d'un écran de comptage, en général à cristaux liquides.

Ce couvercle est lui-même recouvert d'une coiffe qui porte des marquages spécifiques au compteur, assure une fonction anti-fraude et présente une fenêtre externe de visualisation de l'écran.

Un couvre-écran peut être monté sur la coiffe pour recouvrir et protéger cet écran des rayons ultra-violets et empêcher l'introduction d'éléments extérieurs, tels que de la boue ou des poussières, par la fenêtre externe.

Il est connu d'équiper un tel compteur d'un bouton poussoir accessible de l'extérieur et traversant la coiffe. Ce bouton poussoir est relié à une carte électronique portant l'écran de comptage. Ce bouton poussoir assure le défilement et la sélection de diverses données sur cet écran, comme le volume, le débit, la température, des alarmes, le nombre de fuites, etc.

Traversant la coiffe et tous les éléments disposés entre cette coiffe et la carte électronique, la présence de ce bouton poussoir pose un problème d'étanchéité à l'eau et aux poussières. Cet agencement est particulièrement problématique, lorsque le compteur est destiné à être installé dans un environnement susceptible d'être inondé, car la carte électronique doit être située dans un compartiment totalement étanche.

US 2009/0115689 A1 et US6611769 B2 divulguent des exemples de totalisateur.

L'invention résout ce problème en proposant un agencement de défilement des données sur l'écran de comptage qui évite toute traversée de la coiffe.

Pour ce faire, l'invention propose un compteur de fluide, en particulier d'eau, selon la revendication 1.

Selon un mode de réalisation préféré, ledit dispositif de détection est un capteur à effet Hall et ledit couvre-écran est pourvu d'un aimant.

Ledit aimant est avantageusement disposé sur la surface dudit couvre-écran faisant face à ladite carte électronique.

Ledit aimant est de préférence surmoulé sur la dite surface.

Avantageusement, ledit aimant est surmoulé dans une surépaisseur du couvre-voyant, de sorte à venir en position fermée à proximité d'une plaque transparente recouvrant la carte électronique.

L'invention est décrite ci-après plus en détail à l'aide de figures ne représentant qu'un mode de réalisation préféré de l'invention.
La figure 1 est une vue en perspective éclatée d'un compteur conforme à l'invention.
La figure 2 est une vue en perspective d'un compteur conforme à l'invention, le couvre-écran étant en position fermée.
La figure 3 est une vue en perspective d'un compteur conforme à l'invention, le couvre-écran étant en position ouverte.
Les figures 4 et 5 sont des vues partielles en coupe d'un compteur conforme à l'invention, le couvre-écran étant en position fermée et en position ouverte.

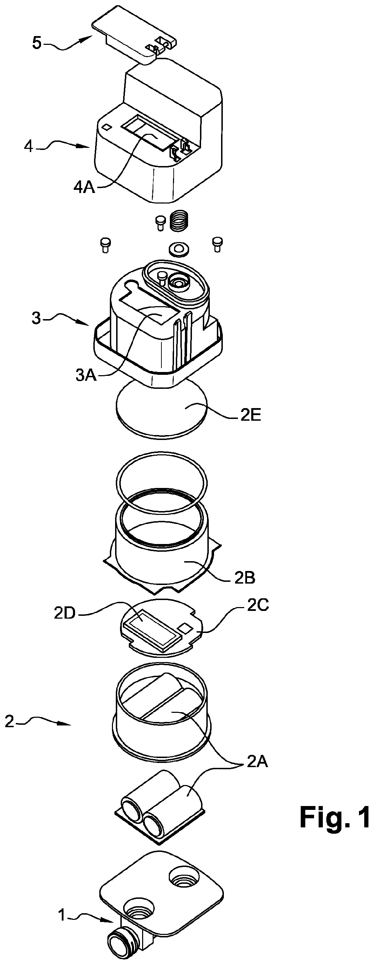

Comme représenté sur la figure 1, un compteur de fluide, en particulier d'eau, comporte une bâche 1 pourvue d'une conduite d'arrivée et d'une conduite de sortie de l'eau et contenant une chambre de mesure, qui peut être à turbine, à piston oscillant ou statique, par exemple à ultrasons. Sur cette bâche 1 est monté et connecté un totalisateur 2 permettant de déterminer le débit ou le volume d'eau traversant la bâche. Ce totalisateur 2 comporte divers éléments électriques, mécaniques et électroniques 2A et est contenu dans un carter 2B, par exemple métallique, et comporte une carte électronique supérieure 2C comportant un écran de comptage 2D et recouverte d'une plaque transparente 2E, en matière plastique ou en verre.

Ce totalisateur 2 est recouvert d'un couvercle 3, en général en matière plastique, qui assure son maintien et qui comporte une fenêtre 3A de visualisation de l'écran 2D.

Ce couvercle 3 est enfin lui-même recouvert d'une coiffe 4 qui porte des marquages spécifiques au compteur, assure une fonction anti-fraude et présente également une fenêtre, externe, 4A de visualisation de l'écran 2D. Elle peut contenir comme représenté sur la figure 1 une antenne de télérelevé.

Un couvre-écran 5 est monté sur la coiffe 4 pour recouvrir et protéger cet écran des rayons ultra-violets et protéger cette fenêtre externe 4A, afin d'empêcher l'introduction d'éléments extérieurs tels que de la boue ou des poussières.

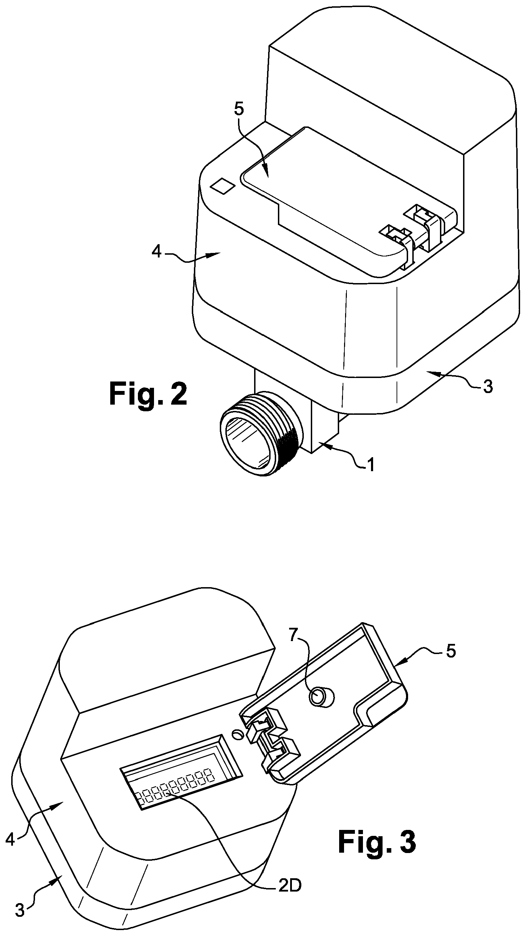

Sur la figure 2, est représenté un tel compteur avec son couvre-voyant 5 en position fermée.

Sur la figure 3, est représenté un tel compteur avec son couvre-voyant 5 en position ouverte laissant l'écran de comptage 2D visible.

Selon l'invention, la carte électronique 2C est pourvue d'un dispositif de détection de la position ouverte ou fermée du couvre-écran 5, la détection de cette position ouverte ou fermée commandant un défilement des données de l'écran 5.

Plus précisément, pour consulter l'écran de comptage 2D, le couvre-voyant 5 doit tout d'abord bien évidemment être disposé dans sa position ouverte. Dans cette position, une première donnée, par exemple le volume d'eau consommée, est indiquée sur l'écran et donc consultable.

D'autres données sont consultables grâce à l'écran 2D, ces données pouvant défiler sur cet écran. Selon l'invention, pour consulter la deuxième donnée, le couvre-voyant 5 est disposé de nouveau dans sa position fermée et la détection de cette position fermée commande un défilement des données de l'écran 2D, et plus précisément l'indication d'une seconde donnée.

Ainsi de suite, par fermetures successives du couvre-voyant 5, les différentes données défilent et peuvent être indiquées et consultées sur l'écran 2D.

Il va de soi que ce défilement peut être commandé tout autant par la détection de la position fermée que par la détection de la position ouverte du couvre-voyant 5.

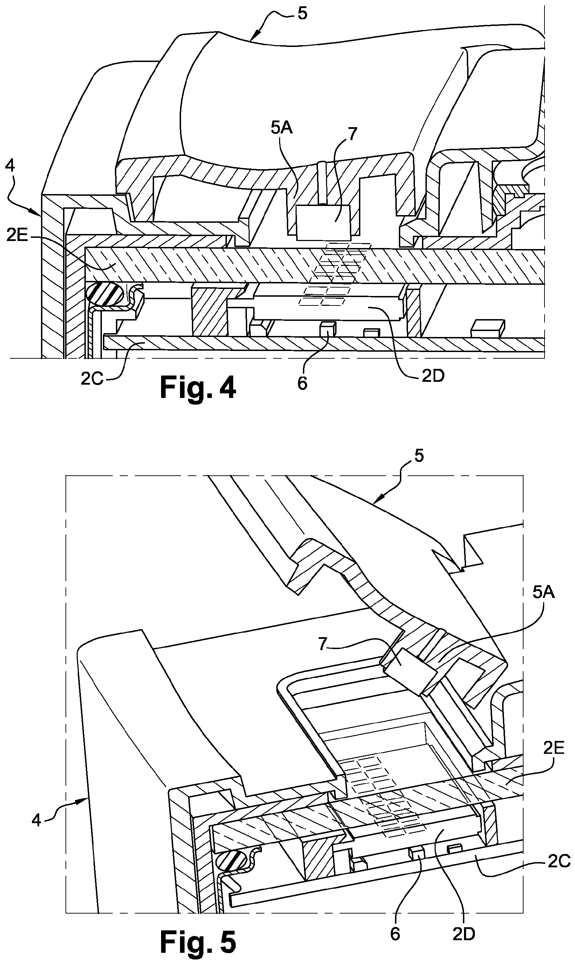

Selon un mode de réalisation préféré, représenté sur les figures 4 et 5, le dispositif de détection porté par la carte électronique 2C est un capteur à effet Hall 6 et le couvre-écran 5 est pourvu d'un aimant 7 avantageusement disposé sur la surface du couvre-écran 5 faisant face à la carte électronique 2C et de préférence surmoulé sur la cette surface.

Pour une meilleure détection, l'aimant 7 est surmoulé dans une surépaisseur 5A du couvre-voyant 5, de sorte à venir en position fermée à proximité de la plaque transparente 2E recouvrant la carte électronique 2C et disposée sous la fenêtre externe 4A de visualisation de l'écran 2D. Il est alors face au capteur à effet Hall 6.

## Revendications

1. Compteur de fluide, en particulier d'eau, comportant un totalisateur (2) présentant une carte électronique (2C) comportant un écran de comptage (2D) pouvant indiquer des données, ce totalisateur (2) étant recouvert d'une coiffe (4) présentant une fenêtre externe (4A) de visualisation dudit écran, un couvre-écran (5) étant monté sur ladite coiffe (4) pour recouvrir et protéger ledit écran (2D) et ladite fenêtre externe (4A), ledit couvre-écran (5) étant déplaçable entre une position ouverte et une position fermée, ladite carte électronique (2C) étant pourvue d'un dispositif de détection de la position ouverte ou fermée dudit couvre-écran (5), compteur **caractérisé en ce que** la carte électronique (2C) est arrangée pour commander le défilement de différentes données dudit écran (2D), lorsque le dispositif de détection détecte une succession de changements en cette position ouverte ou fermée.

2. Compteur selon la revendication 1, **caractérisé en ce que** ledit dispositif de détection est un capteur à effet Hall (6) et **en ce que** ledit couvre-écran (5) est pourvu d'un aimant (7).

3. Compteur selon la revendication 2, **caractérisé en ce que** ledit aimant (7) est disposé sur la surface dudit couvre-écran (5) faisant face à ladite carte électronique (2C).

4. Compteur selon la revendication précédente, **caractérisé en ce que** ledit aimant (7) est surmoulé sur la dite surface.

5. Compteur selon la revendication précédente, **caractérisé en ce que** ledit aimant (7) est surmoulé dans une surépaisseur (5A) du couvre-écran (5), de sorte à venir en position fermée à proximité d'une plaque transparente (2E) recouvrant la carte électronique (2C).

## Patentansprüche

1. Fluidmesser, insbesondere für Wasser, umfassend einen Zähler (2), der eine elektronische Platine (2C) aufweist, die einen Messbildschirm (2D) umfasst, der Daten anzeigen kann, wobei dieser Zähler (2) mit einer Kappe (4) bedeckt ist, die ein äußeres Fenster (4A) zur Sichtbarmachung des Bildschirms aufweist, wobei eine Bildschirmabdeckung (5) auf der Kappe (4) montiert ist, um den Bildschirm (2D) und das äußere Fenster (4A) zu bedecken und zu schützen, wobei die Bildschirmabdeckung (5) zwischen einer geöffneten Stellung und einer geschlossenen Stellung bewegbar ist, wobei die elektronische Platine (2C) mit einer Vorrichtung zur Detektion der geöffneten oder geschlossenen Stellung der Bildschirmabdeckung (5) versehen ist, wobei der Messer **dadurch gekennzeichnet ist, dass** die elektronische Platine (2C) dazu angeordnet ist, das Scrollen verschiedener Daten des Bildschirms (2D) anzusteuern, wenn die Detektionsvorrichtung eine Aufeinanderfolge von Veränderungen dieser geöffneten oder geschlossenen Stellung detektiert.

2. Messer nach Anspruch 1, **dadurch gekennzeichnet, dass** die Detektionsvorrichtung ein Hallsensor (6) ist und dass die Bildschirmabdeckung (5) mit einem Magneten (7) versehen ist.

3. Messer nach Anspruch 2, **dadurch gekennzeichnet, dass** der Magnet (7) auf der Fläche der Bildschirmabdeckung (5), die der elektronischen Platine (2C) zugekehrt ist, angeordnet ist.

4. Messer nach dem vorhergehenden Anspruch, **dadurch gekennzeichnet, dass** der Magnet (7) auf der Fläche aufgespritzt ist.

5. Messer nach dem vorhergehenden Anspruch, **dadurch gekennzeichnet, dass** der Magnet (7) in einer Überdicke (5A) der Bildschirmabdeckung (5) aufgespritzt ist, um in der Nähe einer transparenten Platte (2E), die die elektronische Platine (2C) bedeckt, in eine geschlossene Stellung zu gelangen.

## Claims

1. Fluid, in particular water, meter including a totalizer (2) having an electronic circuit board (2C) including a meter screen (2D) that is able to display data, this totalizer (2) being covered with a cap (4) having an outside window (4A) for viewing said screen, a screen cover (5) being mounted on said cap (4) for covering and protecting said screen (2D) and said outside window (4A), said screen cover (5) being movable between an open position and a closed position, said electronic circuit board (2C) being provided with a detector device for detecting the open or closed position of said screen cover (5), which meter is **characterized in that** the electronic circuit board (2C) is arranged to control the scrolling of various data across said screen (2D) when the detector device detects a succession of changes in this open or closed position.

2. Meter according to Claim 1, **characterized in that** said detector device is a Hall effect sensor (6) and **in that** said screen cover (5) is provided with a magnet (7).

3. Meter according to Claim 2, **characterized in that** said magnet (7) is arranged on the surface of said screen cover (5) facing said electronic circuit board (2C).

4. Meter according to the preceding claim, **characterized in that** said magnet (7) is overmoulded onto said surface.

5. Meter according to the preceding claim, **characterized in that** said magnet (7) is overmoulded into an extra thickness (5A) of the screen cover (5) such that, in the closed position, it comes into proximity with a transparent plate (2A) covering the electronic circuit board (2C).
